# EUROPEAN PATENT SPECIFICATION

(11) **EP 1 797 385 B1**
(45) Date of publication and mention of the grant of the patent: **08.12.2010**
(21) Application number: 05789779.5
(22) Date of filing: 07.09.2005
(51) Int. Cl.: F28D 9/00, F28F 27/00

(54) **HEAT EXCHANGER WITH TEMPERATURE-CONTROLLED VALVE**
WÄRMETAUSCHER MIT TEMPERATURGESTEUERTEM VENTIL
ECHANGEUR THERMIQUE MUNI D'UNE SOUPAPE A TEMPERATURE CONTROLE

(30) Priority: 08.09.2004 SE 0402153
(43) Date of publication of application: 20.06.2007
(73) Proprietor: EP Technology AB, 211 24 Malmö (SE); Sundsvall Energi AB, 851 23 Sundsvall (SE)
(72) Inventor: PERSSON, Lars, S-274 56 Abbekås (SE)
(74) Representative: Bengtsson, Peggy Katrin
(86) International application number: PCT/EP2005/054415
(87) International publication number: WO 2006/027368

(56) References cited:
- EP-A- 0 608 195
- WO-A-01/42729
- WO-A-03/091651
- US-A1- 2004 134 637

## Description

### Field of the invention

This invention relates to a heat exchanger with a temperature sensor and in particular a heat exchanger usable for heating hot water using district heating water. The invention provides a heat exchanger intended to be connected to a valve which can be opened and closed rapidly by suitable location and connection of a temperature sensor which controls the valve.

### Technical background

It is previously known that heat exchangers can be used for heating hot water. A special problem in this respect is that the supply of hot water from the district heating system must be shut off rapidly when the tapping of hot water is interrupted. Otherwise there is a risk that the water will be overheated, creating among other things the risk of scalding. The document EP 608195 discloses a solution to this problem. A temperature sensor is located in an immersion tube which is in contact with the water in both the district heating and hot water circuits. However, because the sensor is located in water, less favourable detection of water temperature is achieved. This applies especially at lower flows and particularly with stationary water. Another known problem is oscillation of hot water temperature during tapping. This applies especially during changes in tapping flow. The most common reason for this problem is a too slow temperature detection.

### Summary of the invention

The present invention provides a solution to the problem by arranging the temperature sensor in metallic heat conducting contact with the plates of the heat exchanger. Heat transmission to the sensor then takes place rapidly, which in turn increases the rate of temperature detection.

The invention therefore refers to a heat exchanger containing: plates placed in a pack and brazed together such that separate channels for a first and a second medium are formed between alternate pairs of plates; two pairs of connections for inlet and outlet for the first and second medium respectively; and a temperature sensor connectable to a first valve to regulate the supply of first medium through the heat exchanger, in which the first medium is intended to transfer heat to the second medium.

In accordance with the invention a temperature sensor is placed in holes through a number of the plates, said holes being provided in plates where ridges meet in the channels for one of the media, such that heat conducting contact is achieved with said plates, the temperature sensor being arranged to control the first valve.

Preferably, the temperature sensor incorporates a bulb that acts mechanically on the first valve.

Suitably, the bulb contains wax with a melting range lying around a predetermined temperature.

### Brief description of the drawings

The invention will be described in detail below with reference to the attached drawings, of which:
Fig 1 is a diagrammatic plan view of a heat exchanger according to the invention,
Fig 2 is a cross-sectional view of a number of plates with a temperature sensor according to the invention, and
Fig 3 is a temperature diagram representing two operational cases.

### Detailed description of preferred embodiments

Plate heat exchangers are generally known devices for exchange of heat between two different media. Plate heat exchangers are used in many different applications and the present invention is not restricted to any special application, even though the invention has been specially developed as a heat exchanger intended to supply hot water using district heating. The invention is easiest to apply to a plate heat exchanger of all the fully brazed type. In other words, the heat exchanger consists of plates with a pattern of grooves with inlet and outlet connections for two media. Plates are placed in a pack and brazed together to form a single unit. Separate channels are formed for the two media which circulate against each other between alternate pairs of plates. This technology is generally known and will not therefore be described in detail here.

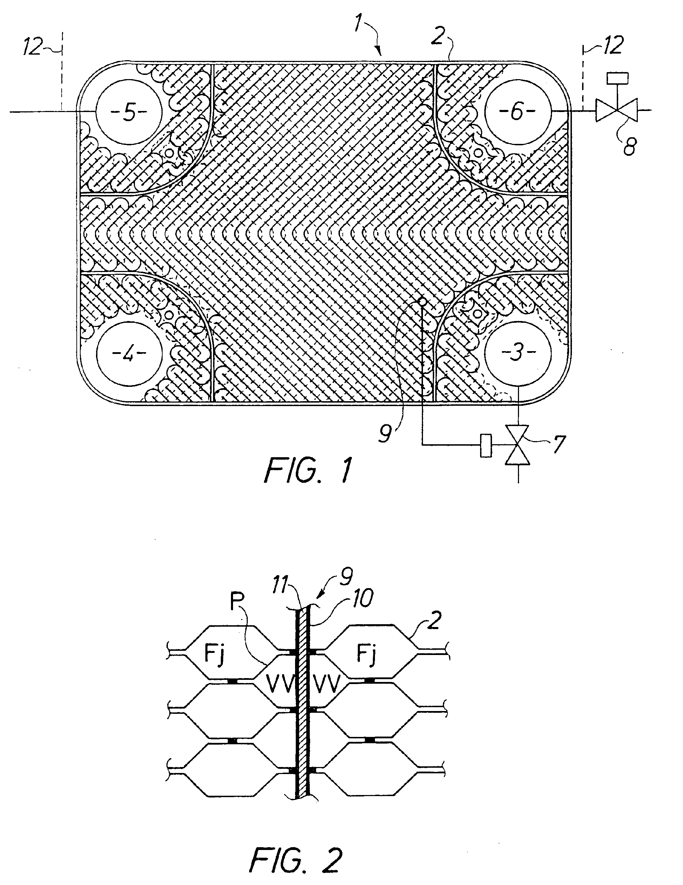

Fig 1 is a diagrammatic view of a heat exchanger for heating water using hot water from a district heating network. The heat exchanger 1 has plates 2 with two pairs of connections. One pair of connections consists of an inlet 3 and an outlet 4 for district heating water Fj. The second pair consists of an inlet 5 and an outlet 6 for hot water VV. A conventional hot water circulation system 12 can be connected to the hot water system as shown by the dotted line. It will be appreciated that the hot water is actually cold or at least at a lower temperature at inlet 5 and is heated in the heat exchanger as it passes through to the outlet 6.

The supply of district heating water is controlled by a valve 7 which is preferably mounted in the district heating water feed line to the heat exchanger 1, as shown, or in the district heating water return line from the heat exchanger 1. The valve 7 can alternatively be built into the heat exchanger 1. Opening and closing of the valve 7 is controlled by a thermostatic function that includes a temperature sensor 9, which will be explained in further detail below, and an actuator capable of opening and closing the valve 7. The tapping of hot water is controlled in the usual manner using at least one valve 8. The valve 8 is usually external and not part of the heat exchanger, typically a number of hot water taps located at various points in a building.

The incoming district heating water is usually at a temperature of about 100°C. This temperature can be higher or lower depending on outdoor temperature, design data for the current district heating system, and other factors. The district heating water should flow through the heat exchanger, either continuously when tap 8 is open or if any connected hot water circuit 12 is operating to heat the hot water, or intermittently if the hot water circuit 12 is absent or not in operation, and when the tap 8 is closed, to cause heat retention of the hot water in the heat exchanger, so that even in this case there is direct access to hot water when the tap 8 is opened. On the other hand it is important that the district heating valve 7 responds directly to temperature changes in the hot water and closes quickly when the tap 8 is closed. If the district heating valve 7 stays open for too long, the water may be overheated more or less dangerously depending on how rapidly the district heating valve 7 closes. If the tap 8 is then opened again, there is a risk of scalding. Normally, the outlet hot water should never have a temperature higher than about 55°C. Delayed closing of the valve 7 also causes increased energy consumption and can cause problems with lime deposits in the heat exchanger.

Fig 2 shows a temperature sensor 9 designed according to the present invention. The temperature sensor 9 is placed through a number of plates 2. This is made possible by holes provided in the plates, preferably where ridges meet in channels for the district heating water. The temperature sensor has a very good, practically direct metallic, heat conducting contact with the plates and is surrounded by the hot water VV (i.e. the medium to be heated) while the channels for the district heating water Fj are at a certain small distance from the sensor 9 depending on the width of the ridges. The sensor is placed in the heat exchanger near the inlet 3 of the district heating water Fj. Thus, it is affected before the hot water has left the heat exchanger.

For the design of holes through a heat exchanger, see publications WO 98/37374 and WO 00/03189.

The sensor can be pressed or brazed directly to the plates 2 or can be located in a tube 10 which is itself pressed or brazed to the plates. The latter variant means that the temperature sensor is detachable from the heat exchanger and can be replaced easily.

Heat transfer from metal plates to a sensor is about seven times faster than heat transfer to a sensor from stationary water. The temperature detection is thus also correspondingly faster compared with the prior art.

Various types of temperature sensors are previously known and can be used in the present invention. In the present invention it is proposed that the temperature sensor has a (sensor body) bulb 11 containing some medium that changes in volume or pressure with changes in temperature, e.g. as with the preferred wax or paraffin (or glycerine). Valves with this type of temperature sensor are previously known, e.g. in the form of thermostatic valves in ordinary radiators for water-based heating systems. When the bulb is heated, the wax melts and takes up a greater volume. In a preferred embodiment, the volume increase of the wax is 19% when the wax melts. The bulb is hydraulically and mechanically connected to the valve 7 and the expanded volume closes the valve 7. When the wax cools, it solidifies again and takes up less volume. A spring biasing the valve 7 then opens the valve 7. Suitably, the wax is a mixture of various paraffins with somewhat different melting points, which means that the wax will have a melting range between the completely solid and liquid forms. The mix is chosen so that the valve reacts at a predetermined temperature T, eg about 55°C (or 53°C), and the melting range should be fairly small, eg a melting range of ΔT = 0.7°C. Within this melting range from T to T+ ΔT, the valve 7 is open to a greater or lesser extent. At temperatures below the melting range, the valve is therefore completely open, while above the melting range it is completely closed.

The volume increase of the wax is conveyed by means of hydraulic liquid through a capillary tube to the actuator. In the actuator, a plunger is moved which acts on the valve 7. It should be noted that the wax is incompressible and thus is not affected by pressure. Thus, the actuator of the valve is controlled by volume and not pressure. Because of this fact the control is not influenced by pressure variations in the district heating water system.

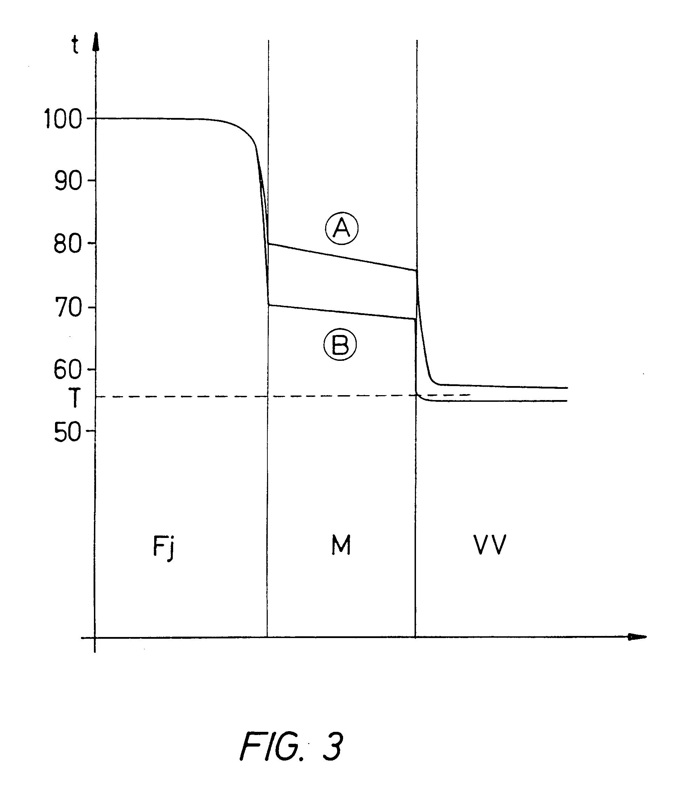

Fig 3 shows a temperature diagram of two operational cases with a heat exchanger according to the invention. The diagram is representative of the temperature e.g. at point P in Fig 2. At the left of the diagram is shown the temperature in the district heating circuit Fj, at the centre the temperature in the metal plate, designated as M in Fig 3, and at the right the temperature in the hot water circuit VV. The temperature sensor 9 is located in metallic contact on the hot water side and the temperature t of the sensor closely follows the temperature on the right side of the metal wall in Fig 3. This effect is reinforced because sensor 9 is located in the hot water channels VV and the district heating water Fj circulates at a given distance due to the location of the sensor in the ridges of the district heating water channels.

The first operational case is the situation in which the hot water tap 8 is closed, and shown on the upper temperature curve A. We assume that the tap 8 has just closed and that no hot water circuit 12 is in operation. The district heating water Fj is still warm. On the hot water side, there is no flow so that a laminar condition occurs. This has a high thermal resistance, so that the temperature in the metal wall and in the hot water close to this rapidly increases, for example to approx 76°C, i.e. significantly higher that the predetermined temperature T. This is also the temperature t of the temperature sensor. Thus, the wax in the bulb is melted and has closed the district heating valve 7. Note that the actual hot water VV heats up considerably more slowly and does not reach a temperature significantly higher than T.

If the hot water tap 8 remains closed over a longer period, the temperature curve A falls and levels out (not shown). When the temperature t in the bulb falls below T + ΔT, the wax begins to solidify and the district heating valve is opened. The hot water is then heated. When the hot water temperature and thus the temperature t of the sensor rise above T + ΔT, the district heating valve 7 closes again. Since the valve opens as soon as the wax has dropped below the temperature T, this feature acts as an automatic heat retention function, while at the same time guaranteeing a short response time of the hot water. In this way heat retention of the hot water at around the temperature T is achieved.

On the other hand, if the hot water valve 8 is opened (or the hot water circuit 12 circulates the hot water VV) there is a faster process. The lower temperature curve B in Fig 3 shows the situation with open hot water tap 8. When the hot water tap 8 is opened, turbulent flow occurs in the hot water, which rapidly cools the metal plates, especially at the adjoining ridges, in other words at such a position where the temperature sensor 9 is located. The cooling typically does not take more than 2 seconds. The temperature t in the sensor bulb 9 falls below temperature T and the wax solidifies completely, causing district heating valve 7 to open. The temperature curve then quickly appears as in B.

This situation prevails until the hot water tap 8 closes (or the hot water circuit 12 stops). Then the hot water flow suddenly becomes turbulent, and the thermal resistance of the hot water increases so that the metal is rapidly heated. The hot water is heated considerably more slowly but the temperature sensor 9 primarily detects the temperature of the metal. So the bulb 11 heats rapidly to above the temperature T + ΔT, and the district heating valve 7 is completely closed. In this way no overheating of the hot water occurs. After a while the temperature is as in the upper temperature curve A.

For best function, the sensor 9 should be located as near as possible to the district heating inlet 3. The asymmetrical location of the sensor means that double tools advantageously should be used when manufacturing the plates. As an alternative, the temperature sensor outlet can provided rotationally symmetrical both at the top and bottom of the heat exchanger. Only one outlet is used for the temperature sensor while the other can be empty. In addition, the district heating water should flow in the opposite direction to the hot water.

The temperature sensor can be arranged through the whole heat exchanger pack or only through a lesser number of plates.

The control according to the invention operates as a thermal PID controller. The proportionality action is obvious; with a water temperature higher than the temperature T, there is an increased melting resulting in that the wax is expanded. The integration action is determined by the ratio of melted wax to solid phase. If the melting heat is 160 kJ/kg, this corresponds to an energy value of approximately 40°C temperature change. This means that the volume of the wax is not defined for the temperature T. Thus, when the surrounding temperature is around the temperature T, there is no change of volume. At surrounding temperatures lower than the temperature T the wax sludge begins solidify without changing the temperature of the wax. Only when the wax has solidified completely, the temperature of the wax begins to change. In contrast, the derivative action has got nothing to do with the wax. The derivative action is obtained by locating the sensor with the wax close to the inlet of the district heating water. This means that when the valve opens more, there is a temperature increase in the material surrounding the wax faster than the temperature increase in the water.

A person skilled in the art will understand that the heat exchanger design can be varied in terms of number of plates and different ridge patterns, heat exchanger connections and valves, etc. The scope of the invention is limited only by the following claims.

## Claims

1. A heat exchanger (1) comprising: plates (2) placed in a pack and brazed together so that separate channels for a first and a second medium (Fj, VV) are formed between alternate pairs of plates (2); two pairs of connections for inlet (3) and outlet (4) of the first medium (Fj) and inlet (5) and outlet (6) for the second medium (VV), respectively; and a temperature sensor (9) connectable to a first valve (7) to control the supply of the first medium (Fj) through the heat exchanger (1), the first medium (Fj) being intended to supply heat to the second medium (VV), **characterised in that** the temperature sensor (9) is placed in holes through a number of plates (2), said holes being provided in plates where ridges meet in the channels for one of the media, such that heat-conducting contact is achieved with said plates, and **in that** the temperature sensor (9) is arranged to control the first valve (7).

2. A heat exchanger according to claim 1, **characterised in that** the temperature sensor (9) is secured to the plates (2).

3. A heat exchanger according to claim 2, **characterised in that** the temperature sensor (9) is brazed or pressed to the plates (2).

4. A heat exchanger according to claim 1, **characterised in that** the temperature sensor (9) is detachably located in a tube (10) which is itself secured to the plates (2).

5. A heat exchanger according to claim 4, **characterised in that** the tube (10) is brazed or pressed to the plates (2).

6. A heat exchanger according to any of the preceding claims, **characterised in that** the temperature sensor (9) is placed so that it is surrounded by channels for the second medium (VV).

7. A heat exchanger according to any of the preceding claims, **characterised in that** the first (Fj) and second (VV) media are arranged to flow in opposite directions and **in that** the temperature sensor (9) is placed on that part of the heat exchanger (1) where the inlet (3) for the first medium (Fj) and outlet (6) for the second medium (VV) are located.

8. A heat exchanger according to claim 7, **characterised in that** the temperature sensor (9) is located closer to the inlet (3) for the first medium (Fj).

9. A heat exchanger according to any of the preceding claims, **characterised in that** the temperature sensor (9) contains a bulb (11) which mechanically affects the first valve (7).

10. A heat exchanger according to claim 9, **characterised in that** the bulb (11) contains wax such that the first valve (7) is arranged to close when the wax is melted and to open when the wax is solidified.

11. A heat exchanger according to claim 10, **characterised in that** the wax has a melting range around a predetermined temperature T.

12. A heat exchanger according to claim 11, **characterised in that** the predetermined temperature T is approx 55°C.

13. A heat exchanger according to claim 11 or 12, **characterised by** a wax melting range of approx 0.7°C.

14. A heat exchanger according to claim 11, 12 or 13, **characterised in that** the melting heat of the wax is 160 kJ/kg.

15. A heat exchanger according to any of the preceding claims **characterised in that** the temperature sensor (9) is arranged to open the first valve (7) when the temperature sensor (9) detects a temperature decrease and that the detected temperature t is lower than a predetermined temperature T; and **in that** the temperature sensor (9) is arranged to close the first valve (7) when the temperature sensor (9) detects a temperature increase and the detected temperature t is higher than a somewhat higher predetermined temperature T+ΔT.

16. A heat exchanger according to any of the preceding claims, **characterised in that** the inlet (3) and the outlet (4) for the first medium (Fj) are arranged to be connected to a district heating network and the inlet (5) and the outlet (6) for the second medium (VV) are arranged to be connected to a hot water circuit which contains at least one second valve (8) to control supply of the second medium (VV) through the heat exchanger (1).

17. A heat exchanger according to claim 16, **characterised in that** the heat exchanger is arranged to be connected to a hot water circuit which also contains a hot water circulation system (12).

## Patentansprüche

1. Wärmetauscher (1) umfassend: Platten (2), in einem Stapel angeordnet und miteinander verlötet, so dass separate Kanäle für ein erstes und ein zweites Medium (Fj, VV) zwischen alternierenden Plattenpaaren (2) gebildet werden; zwei Anschlusspaare, für Eintritt (3) und Austritt (4) des ersten Mediums (Fj) und entsprechend Eintritt (5) und Austritt (6) für das zweite Medium (VV); und einen Temperatursensor (9) verbindbar mit einem ersten Ventil (7) zur Steuerung der Speisung des Wärmetauschers (1) mit dem ersten Medium (Fj), das erste Medium (Fj) vorgesehen, um dem zweiten Medium (VV) Wärme zuzuführen, **dadurch gekennzeichnet, dass** der Temperatursensor (9) in Löchern durch eine Mehrzahl von Platten (2) angeordnet ist, wobei die Löcher in den Platten dort bereitgestellt sind, wo Kanten in den Kanälen für eines der Medien aufeinander treffen, so dass ein wärmeübertragender Kontakt mit den Platten erreicht wird und dass der Temperatursensor (9) so angeordnet ist, um das erste Ventil (7) zu steuern.

2. Wärmetauscher gemäß Anspruch 1, **dadurch gekennzeichnet, dass** der Temperatursensor (9) an den Platten (2) befestigt ist.

3. Wärmetauscher gemäß Anspruch 2, **dadurch gekennzeichnet, dass** der Temperatursensor (9) mit den Platten (2) verlötet oder verpresst ist.

4. Wärmetauscher gemäß Anspruch 1, **dadurch gekennzeichnet, dass** sich der Temperatursensor (9) herausnehmbar in einer Röhre (10) befindet, die selbst an den Platten (2) befestigt ist.

5. Wärmetauscher gemäß Anspruch 4, **dadurch gekennzeichnet, dass** die Röhre (10) mit den Platten (2) verlötet oder verpresst ist.

6. Wärmetauscher gemäß einem der vorstehenden Ansprüche, **dadurch gekennzeichnet, dass** der Temperatursensor (9) angeordnet ist, so dass er von Kanälen für das zweite Medium (VV) umgeben ist.

7. Wärmetauscher gemäß einem der vorstehenden Ansprüche, **dadurch gekennzeichnet, dass** die ersten (Fj) und zweiten (VV) Medien angeordnet sind, um in gegensätzliche Richtungen zu fließen und dass der Temperatursensor (9) in dem Abschnitt des Wärmetauschers (1) angeordnet ist, wo sich der Eintritt (3) für das erste Medium (Fj) und Austritt (6) für das zweite Medium (VV) befinden.

8. Wärmetauscher gemäß Anspruch 7, **dadurch gekennzeichnet, dass** der Temperatursensor (9) näher an dem Eintritt (3) für das erste Medium (Fj) angeordnet ist.

9. Wärmetauscher gemäß einem der vorstehenden Ansprüche, **dadurch gekennzeichnet, dass** der Temperatursensor (9) einen Kolben (11) umfasst, der mechanisch auf das erste Ventil (7) einwirkt.

10. Wärmetauscher gemäß Anspruch 9, **dadurch gekennzeichnet, dass** der Kolben (11) Wachs beinhaltet, so dass das erste Ventil (7) angeordnet ist, um zu schließen, wenn das Wachs geschmolzen ist und zu öffnen, wenn das Wachs erstarrt ist.

11. Wärmetauscher gemäß Anspruch 10, **dadurch gekennzeichnet, dass** das Wachs einen Schmelzbereich um eine vorgegebene Temperatur T aufweist.

12. Wärmetauscher gemäß Anspruch 11, **dadurch gekennzeichnet, dass** die vorgegebene Temperatur T circa 55°C beträgt.

13. Wärmetauscher gemäß Anspruch 11 oder 12, **gekennzeichnet durch** einen Schmelzbereich von circa 0,7°C.

14. Wärmetauscher gemäß einem der Ansprüche 11, 12 oder 13, **dadurch gekennzeichnet, dass** die Schmelzwärme des Wachses 160 kJ/kg beträgt.

15. Wärmetauscher gemäß einem der vorstehenden Ansprüche, **dadurch gekennzeichnet, dass** der Temperatursensor (9) angeordnet ist, um das erste Ventil (7) zu öffnen, wenn der Temperatursensor (9) einen Temperaturabnahme erfasst und dass die erfasste Temperatur t kleiner als eine vorgegebene Temperatur T ist; und dass der Temperatursensor (9) angeordnet ist, um das erste Ventil (7) zu schließen, wenn der Temperatursensor (9) einen Temperaturanstieg erfasst und der erfasste Temperaturanstieg t höher ist als eine etwas höhere vorgegebene Temperatur T+ΔT ist.

16. Wärmetauscher gemäß einem der vorstehenden Ansprüche, **dadurch gekennzeichnet, dass** der Eintritt (3) und der Austritt (4) für das erste Medium (Fj) angeordnet sind, um mit einem Fernwärmenetz verbunden zu sein und der Eintritt (5) und der Austritt (6) für das zweite Medium (VV) angeordnet ist, um mit einem Heißwasserkreislauf verbunden zu sein, der mindestens ein zweites Ventil (8) umfasst, um die Speisung des Wärmetauschers (1) mit dem zweiten Medium (VV) zu steuern.

17. Wärmetauscher gemäß Anspruch 16, **dadurch gekennzeichnet, dass** der Wärmetauscher angeordnet ist, um mit einem Heißwasserkreislauf verbunden zu sein, der zudem ein Heißwasserumlaufsystem (12) umfasst.

## Revendications

1. Echangeur de chaleur (1) comprenant : des plaques (2) placées dans un bloc et brasées ensemble de sorte que des canaux séparés pour un premier et un deuxième milieu (Fj, VV) sont formés entre des paires alternées de plaques (2) ; deux paires de raccordements pour l'entrée (3) et la sortie (4) du premier milieu (Fj) et l'entrée (5) et la sortie (6) pour le deuxième milieu (VV), respectivement ; et un capteur de température (9) pouvant se raccorder à une première vanne (7) servant à contrôler l'alimentation du premier milieu (Fj) à travers l'échangeur de chaleur (1), le premier milieu (Fj) étant introduit pour alimenter de la chaleur au deuxième milieu (VV), **caractérisé en ce que** le capteur de température (9) est placé dans des trous à travers un certain nombre de plaques (2), lesdits trous étant prévus dans les plaques où des crêtes se rencontrent dans les canaux pour l'un des milieux, de sorte que le contact conducteur de chaleur est obtenu avec lesdites plaques, et **en ce que** le capteur de température (9) est agencé de manière à contrôler la première vanne (7).

2. Echangeur de chaleur selon la revendication 1, **caractérisé en ce que** le capteur de température (9) est fixé aux plaques (2).

3. Echangeur de chaleur selon la revendication 2, **caractérisé en ce que** le capteur de température (9) est brasé ou pressé sur les plaques (2).

4. Echangeur de chaleur selon la revendication 1, **caractérisé en ce que** le capteur de température (9) est positionné de manière détachable dans un tube (10) qui est lui-même fixé aux plaques (2).

5. Echangeur de chaleur selon la revendication 4, **caractérisé en ce que** le tube (10) est brasé ou pressé sur les plaques (2).

6. Echangeur de chaleur selon l'une quelconque des revendications précédentes, **caractérisé en ce que** le capteur de température (9) est placé de sorte à être entouré par des canaux pour le deuxième milieu (VV).

7. Echangeur de chaleur selon l'une quelconque des revendications précédentes, **caractérisé en ce que** les premier (Fj) et deuxième (VV) milieux sont agencés pour s'écouler dans des directions opposées et **en ce que** le capteur de température (9) est placé sur cette partie de l'échangeur de chaleur (1) où l'entrée (3) pour le premier milieu (Fj) et la sortie (6) pour le deuxième milieu (VV) sont positionnées.

8. Echangeur de chaleur selon la revendication 7, **caractérisé en ce que** le capteur de température (9) est positionné plus près de l'entrée (3) pour le premier milieu (Fj).

9. Echangeur de chaleur selon l'une quelconque des revendications précédentes, **caractérisé en ce que** le capteur de température (9) contient une ampoule (11) qui affecte mécaniquement la première vanne (7).

10. Echangeur de chaleur selon la revendication 9, **caractérisé en ce que** l'ampoule (11) contient de la cire de sorte que la première vanne (7) est agencée de manière à se fermer lorsque la cire fond et s'ouvrir lorsque la cire se solidifie.

11. Echangeur de chaleur selon la revendication 10, **caractérisé en ce que** la cire a une plage de fusion autour d'une température prédéterminée T.

12. Echangeur de chaleur selon la revendication 11, **caractérisé en ce que** la température prédéterminée T est environ 55°C.

13. Echangeur de chaleur selon la revendication 11 ou 12, **caractérisé par** une plage de fusion de cire d'approximativement 0,7°C.

14. Echangeur de chaleur selon la revendication 11, 12 ou 13, **caractérisé en ce que** la chaleur de fusion de la cire est de 160 kJ/kg.

15. Echangeur de chaleur selon l'une quelconque des revendications précédentes, **caractérisé en ce que** le capteur de température (9) est agencé de manière à ouvrir la première vanne (7) lorsque le capteur de température (9) détecte une diminution de température et **en ce que** la température détectée t est inférieure à une température prédéterminée T ; et **en ce que** le capteur de température (9) est agencé pour fermer la première vanne (7) lorsque le capteur de température (9) détecte une augmentation de température et que la température détectée t est supérieure à une température prédéterminée T + ΔT légèrement supérieure.

16. Echangeur de chaleur selon l'une quelconque des revendications précédentes, **caractérisé en ce que** l'entrée (3) et la sortie (4) pour le premier milieu (Fj) sont agencées pour être raccordées à un réseau de chauffage urbain et l'entrée (5) et la sortie (6) pour le deuxième milieu (VV) sont agencées pour être raccordées à un circuit d'eau chaude qui contient au moins une deuxième vanne (8) servant à contrôler l'alimentation du deuxième milieu (VV) à travers l'échangeur de chaleur (1).

17. Echangeur de chaleur selon la revendication 16, **caractérisé en ce que** l'échangeur de chaleur est agencé de manière à être raccordé à un circuit d'eau chaude qui contient également un système de circulation d'eau chaude (12).
